# FASCICULE DE BREVET EUROPEEN

(11) **EP 2 717 019 B1**
(45) Date de publication et mention de la délivrance du brevet: **30.11.2016**
(21) Numéro de dépôt: 13186909.1
(22) Date de dépôt: 01.10.2013
(51) Int. Cl.: G01C 23/00, B64D 45/00, G01D 7/02

(54) **Procédé et dispositif d'affichage de paramètres de vol dans un aéronef.**
Anzeigeverfahren und -vorrichtung von Flugparametern in einem Luftfahrzeug.
Method and device for displaying flight parameters in an aircraft.

(30) Priorité: 08.10.2012 FR 1259538
(43) Date de publication de la demande: 09.04.2014
(73) Titulaire: Airbus Opérations SAS, 31060 Toulouse (FR)
(72) Inventeur: Louise, Pascale, 31100 TOULOUSE (FR); Perrin, Fabien, 31000 TOULOUSE (FR); MacDonald, Delphine, 31000 TOULOUSE (FR); Chauveau, Nicolas, 34000 MONTPELLIER (FR)
(74) Mandataire: Gevers & Orès

(56) Documents cités:
- EP-A1- 2 360 450
- FR-A1- 2 887 329
- US-A1- 2007 005 198
- US-A1- 2008 140 270

## Description

La présente invention concerne un procédé et un dispositif d'affichage de paramètres de vol sur un aéronef, notamment un avion de transport. Ce dispositif d'affichage est susceptible de représenter un dispositif de dialogue permettant un dialogue entre un opérateur de l'aéronef, en particulier un pilote, et un système de guidage dudit aéronef.

On sait que les aéronefs dotés d'un système de guidage, à savoir soit d'un directeur de vol qui calcule des consignes de pilotage en fonction de consignes de guidage soit d'un système de pilotage automatique qui permet de suivre des consignes de guidage de façon automatique, sont pourvus d'un rappel (ou résumé) synthétique du comportement de ce système de guidage qui permet au pilote de l'aéronef de connaître les modes de guidage de l'aéronef.

Un résumé synthétique du comportement du système de guidage (directeur de vol ou système de pilotage automatique, associé ou non à une commande automatique de la poussée) est réalisé, en général, sur les écrans affichant les paramètres primaires du vol, de type PFD (pour « Primary Flight Display » en anglais), au niveau d'un tableau de type FMA (pour « Flight Mode Annunciator » en anglais). Ce résumé synthétique rappelle, généralement, les modes de guidage engagés (actifs) sur chaque axe (vitesse, latéral, vertical), ainsi que les modes de guidage armés, c'est-à-dire ceux qui ont été demandés par le pilote et qui s'engageront de façon automatique lorsque des conditions d'engagement du mode seront remplies. A titre d'exemple, en dehors de la trajectoire du plan de vol, en mode de maintien de cap convergeant vers la trajectoire du plan de vol avec le mode de capture et de maintien de la trajectoire du plan de vol armé, ce dernier mode s'engage de façon automatique à l'approche du plan de vol.

A titre d'exemple non exhaustif, les modes de guidage pris en compte dans le tableau de type FMA, peuvent être les suivants :
- mode de l'automanette :
   ∘ « THRUST » : mode commandant une poussée fixe ;
   ∘ « SPEED » : mode commandant une poussée variable permettant de tenir une consigne de vitesse air (CAS) ou de MACH,... ;
- mode vertical :
   ∘ « OP CLB » : mode de montée vers une altitude de consigne avec une poussée fixe en respectant une vitesse air (CAS) ;
   ∘ « OP DES » : mode de descente vers une altitude de consigne avec une poussée fixe réduite en respectant une vitesse air (CAS) ;
   ∘ « VS » : mode de maintien d'une vitesse verticale (de montée ou de descente) ;
   ∘ « FPA » : mode de maintien de pente (de montée ou de descente) ;
   ∘ « G/S » : mode de suivi d'un axe vertical correspondant à un faisceau d'approche,... ;
- mode latéral :
   ∘ « HDG » : mode de capture et de maintien d'un cap (HEADING) ;
   ∘ « TRK » : mode de capture et de maintien de route (TRACK) ;
   ∘ « NAV » : mode de suivi de plan de vol (itinéraire) ;
   ∘ « LOC » : mode de suivi d'un axe latéral correspondant à un faisceau d'approche,... ;
- catégorie d'approche (indiquant, entre autres, si un atterrissage automatique est possible ou non selon l'état des systèmes à bord) ; et
- état des fonctions (indiquant l'état d'engagement des systèmes de guidage tels que le système de pilotage automatique, le directeur de vol, la gestion automatique de la poussée).

De plus, le tableau de type FMA indique au pilote les modes engagés (actifs), ainsi que les modes armés.

Grâce à ce résumé textuel des modes de guidage présents (engagés) et à venir (armés), le pilote dispose d'une synthèse des objectifs pris en compte par le système de guidage.

Afin de compléter cette vision, le pilote va ensuite regarder les consignes de guidage associées aux modes de guidage sur l'écran PFD, ainsi que les paramètres de vol courants. Ces deux valeurs (valeur courante et valeur de consigne) sont affichées sur une même échelle permettant de voir leurs positions relatives (entre autres), et leurs positions par rapport à des valeurs caractéristiques (par exemple des vitesses caractéristiques sur l'échelle de vitesse).

En mode de montée vers une altitude, la valeur de la consigne d'altitude prise en compte par le système se retrouve sur l'échelle d'altitude de l'écran PFD.

L'ensemble formé du tableau FMA et de l'écran PFD permet au pilote d'accéder à une vision complète du comportement du système de guidage.

Le tableau FMA fournit un résumé textuel qui nécessite un apprentissage de la part des pilotes pour associer au label textuel d'un mode son comportement. Par exemple, avec ce type de restitution textuelle, le pilote doit savoir (apprendre) que, pour le label « OP CLB », le comportement du mode est celui d'une montée sans contrainte d'altitude vers un niveau de vol, avec une poussée fixe des moteurs (sur le niveau « Climb »), tout en respectant une vitesse air (CAS). En revanche, le mode « CLB » indiquera le respect des contraintes d'altitude sur la montée le cas échéant.

Par ailleurs, on connaît :
- par le document US-2008/14020, un système et un procédé pour afficher des paramètres de vol sur un aéronef à l'aide d'un écran de visualisation. Ce document prévoit d'afficher une bande de guidage en vitesse pour indiquer un domaine acceptable de vitesses accompagnant un signal de guidage de navigation ;
- par le document EP-2 360 450, un système embarqué d'évaluation de stratégies de vol à bord d'un aéronef. Ce système comprend des moyens d'interface pour fournir une enveloppe de valeurs représentatives d'un domaine de définition d'une pluralité de stratégies de vol et pour fournir au moins une stratégie déterminée ; et
- par le document FR-2 887 329, un dispositif d'affichage pour un aéronef qui suit un plan de vol, pour afficher, sur une échelle de distance, notamment des indicateurs qui indiquent des limites d'un écart latéral maximal autorisé de l'aéronef, de part et d'autre de la trajectoire de vol latérale.

La présente invention concerne un procédé d'affichage de paramètres de vol sur un aéronef susceptible d'être guidé par un système de guidage selon l'un d'une pluralité de modes de guidage, qui a pour objet de venir supporter la compréhension du pilote concernant notamment le comportement des modes de guidage de l'aéronef.

A cet effet, selon l'invention, ledit procédé d'affichage de paramètres de vol sur un aéronef, à l'aide d'au moins un écran de visualisation, de préférence un écran de pilotage de type PFD (« Primary Flight Display » en anglais), comprenant des éléments d'affichage dédiés à des paramètres de vol donnés qui comprennent chacun au moins une échelle correspondante, ledit aéronef étant susceptible d'être guidé par un système de guidage selon l'un d'une pluralité de modes de guidage, est remarquable en ce que l'on surveille ledit système de guidage de l'aéronef de manière à pouvoir détecter une situation dans laquelle : l'aéronef est guidé par ledit système de guidage selon un mode de guidage avec pour objectif au moins une consigne de guidage donnée concernant un paramètre de vol donné et ledit mode de guidage maintient cette consigne de guidage donnée, et en ce que, lorsqu'une telle situation est détectée, on met en évidence, sur l'élément d'affichage dédié audit paramètre de vol et affiché sur l'écran de visualisation, une partie d'échelle qui est réduite, et ceci à une taille correspondant au plus à une plage de maintien de ladite consigne de guidage (en fonction de la performance du système). Cette partie d'échelle ainsi réduite est dite « partie d'échelle réduite » ci-après. Cette plage de maintien peut être une plage considérée comme acceptable pour cette consigne de guidage ou bien simplement la valeur courante seule (qui, dans ce cas, correspond à la valeur de consigne).

De plus, selon l'invention, on vérifie si le mouvement de l'aéronef est cohérent avec une consigne de guidage relative à un paramètre de vol, et en fonction de cette vérification : - - si le mouvement de l'aéronef est cohérent avec cette consigne de guidage, on affiche seulement une partie de l'échelle à partir de la valeur courante de ce paramètre de vol, et ceci dans le sens du mouvement de l'aéronef ; et - - si le mouvement de l'aéronef n'est pas cohérent avec cette consigne de guidage, on déroule l'échelle dans les deux sens par rapport à la valeur courante du paramètre de vol, et ceci sur une demi-échelle complète dans le sens du mouvement de l'aéronef, et sur la partie de l'échelle allant jusqu'à la consigne dans l'autre sens, de façon à mettre en évidence cette situation. J

Ainsi, grâce à l'invention, on dispose sur l'écran, de préférence de type PFD, d'un affichage mettant en évidence les informations utiles au pilote concernant un paramètre de vol, en réduisant l'échelle correspondante. Ceci simplifie la lecture et la compréhension de l'affichage pour le pilote.

La présente invention peut être appliquée à toute consigne de guidage utilisée par un système de guidage et susceptible d'être affichée, et notamment aux consignes de guidage suivantes : vitesse, cap, altitude, vitesse verticale/pente.

En outre, de façon avantageuse, si ledit aéronef est guidé avec le maintien d'une pluralité de consignes de guidage, on met en évidence une partie d'échelle réduite pour chacune desdites consignes de guidage tenues. Ainsi, en regardant l'écran, le pilote est directement informé que toutes les consignes de guidage demandées sont tenues par le système de guidage.

De plus, avantageusement, si pour un paramètre de vol une consigne de guidage est modifiée par l'entrée d'une nouvelle consigne de guidage (par le pilote ou par le système en mode managé par exemple), on met en évidence une partie d'échelle partant de la valeur courante de ce paramètre de vol jusqu'à ladite nouvelle consigne de guidage. Ainsi, le pilote est informé visuellement de cette situation, et de la différence entre la valeur courante et celle que le système cherche à atteindre.

Par ailleurs, de façon avantageuse, si la valeur courante d'un paramètre de vol s'éloigne de la consigne de guidage (par exemple en raison d'un gradient de vent qui modifie la vitesse air), on met également en évidence une partie d'échelle définie entre ces deux valeurs.

En outre, avantageusement, on surveille la tendance, croissante ou décroissante, d'un paramètre de vol de l'aéronef, et on affiche la partie de l'échelle (de préférence une demi-échelle) à partir de la valeur courante de ce paramètre de vol, correspondant à la tendance de l'aéronef, s'il n'y a pas de consigne de guidage correspondante, et ceci jusqu'à la consigne de guidage si elle se trouve sur cette partie d'échelle.

En outre, avantageusement, pour un paramètre de vol correspondant à une vitesse de l'aéronef, on affiche de façon permanente l'ensemble des valeurs utiles de vitesse sur une échelle de vitesse (contrairement à une échelle d'amplitude partielle centrée sur la valeur courante). Cette solution permet au pilote d'avoir une information visuelle de l'état de la vitesse, à savoir si elle est élevée (graphiquement en haut de l'échelle fixe) ou basse (graphiquement en bas de l'échelle fixe).

Par ailleurs, de façon avantageuse, pour au moins une échelle dédiée à un paramètre de vol (par exemple une échelle de vitesse ou de cap), on affiche la totalité de l'échelle en mettant en évidence une partie de l'échelle (entre la valeur courante et la valeur de consigne) et en affichant de façon graphiquement atténuée (en transparence par exemple) le reste de cette échelle, comme précisé ci-dessous.

En outre, avantageusement, en cas de présélection (pour un paramètre de vol) d'une consigne de guidage, dite préréglée (ou de « preset »), on ajoute sur l'échelle dédiée à ce paramètre de vol un lien graphique entre la valeur courante dudit paramètre de vol et ladite consigne de guidage préréglée, de façon à montrer le lien (et le sens) entre la valeur courante et cette présélection. De plus, lorsque la consigne de guidage préréglée est validée et devient une nouvelle consigne de guidage effective, on déroule l'échelle entre la valeur courante et cette nouvelle consigne de guidage effective.

Par ailleurs, de façon avantageuse, lors d'un pilotage manuel de l'aéronef (lorsque le système automatique de pilotage est désengagé), on déroule sur l'écran de visualisation dans leur globalité toutes les échelles dont le paramètre de vol correspondant est soumis au mode de pilotage manuel de manière à créer une différenciation visuelle caractéristique entre ce mode de pilotage manuel et un autre mode de pilotage (de type automatique).

En outre, lors de la mise en oeuvre par le système de guidage, soit d'un mode de capture d'une consigne de guidage d'un paramètre de vol, soit d'une protection relative à un paramètre de vol, on affiche sur l'échelle dédiée à ce paramètre de vol une animation représentant un comportement graphique dynamique et contextuel, qui permet de bien faire comprendre cette situation. Plus précisément :
- lors de la mise en oeuvre d'un mode de capture d'une consigne de guidage, on affiche une animation qui illustre l'état de capture de cette consigne de guidage ; et
- lors de la mise en oeuvre d'une protection relative à un paramètre de vol, on affiche une animation qui permet de montrer ce qui est protégé par le système de guidage.

Par ailleurs, dans un mode de réalisation particulier, lorsque le système de guidage dispose de deux valeurs de consigne de guidage qu'il ne peut maintenir simultanément, on met en évidence de façon graphique sur l'écran de visualisation celle qui est considérée comme prioritaire par le système de guidage.

En outre, avantageusement, si pour un paramètre de vol, une consigne de guidage effectivement prise en compte par le système de guidage est différente d'une consigne de guidage entrée, on scinde sur l'élément d'affichage dédié à ce paramètre de vol la représentation graphique de la consigne de guidage en deux parties, et on met en évidence la partie relative à la consigne de guidage effectivement prise en compte tout en conservant une représentation de la partie relative à la consigne de guidage entrée par le pilote.

Dans le cadre de la présente invention, une mise en évidence graphique d'un élément, notamment d'une échelle, peut être réalisée de différentes manières et notamment par un contraste particulier, un design graphique différent, des traits plus larges, une luminosité ou des contrastes accentués, davantage de graduations, des modifications de la taille des caractères,...

Ainsi, en particulier à l'aide des caractéristiques précitées, le procédé d'affichage conforme à l'invention vient supporter la compréhension par le pilote du comportement des modes de guidage de l'aéronef par une modification graphique dynamique et contextuelle des éléments affichés sur un écran de visualisation de type PFD.

La présente invention présente également les avantages suivants :
- l'affichage mis en oeuvre est compréhensible de façon universelle, quelle que soit la langue et la culture d'origine du pilote ;
- elle renforce l'apprentissage du pilote qui peut continuer à apprendre pendant les phases opérationnelles, car l'interface utilisée pour la mise en oeuvre de l'invention lui apportera une compréhension sur le comportement du système de guidage tout au long de son utilisation ; et
- elle permet d'expliciter davantage les objectifs recherchés par le système de guidage.

La présente invention concerne également un dispositif d'affichage de paramètres de vol sur un aéronef, en particulier un avion de transport.

Selon l'invention, ledit dispositif comporte :
- des moyens d'affichage comprenant au moins un écran de visualisation, de préférence un écran de pilotage de type PFD (« Primary Flight Display »), qui est pourvu d'éléments (ou de zones) d'affichage dédiés à des paramètres de vol et comprenant chacun au moins une échelle correspondante, ledit aéronef étant susceptible d'être guidé par un système de guidage selon l'un d'une pluralité de modes de guidage ; et
- des moyens de surveillance pour surveiller ledit système de guidage de l'aéronef de manière à pouvoir détecter une situation dans laquelle : l'aéronef est guidé par ledit système de guidage selon un mode de guidage avec pour objectif au moins une consigne de guidage donnée concernant un paramètre de vol donné et ledit mode de guidage maintient cette consigne de guidage donnée, et en ce que, lorsqu'une telle situation est détectée, lesdits moyens d'affichage mettent en évidence, sur l'élément d'affichage dédié audit paramètre de vol et affiché sur l'écran de visualisation, une partie d'échelle qui est réduite et ceci à une taille correspondant au plus à une plage de maintien de ladite consigne de guidage.

De plus, selon l'invention, les moyens de surveillance sont configurés pour vérifier si le mouvement de l'aéronef est cohérent avec une consigne de guidage relative à un paramètre de vol, et les moyens d'affichage sont configurés pour :
- si le mouvement de l'aéronef est cohérent avec cette consigne de guidage, afficher seulement une partie de l'échelle à partir de la valeur courante de ce paramètre de vol, et ceci dans le sens du mouvement de l'aéronef ; et
- si le mouvement de l'aéronef n'est pas cohérent avec une consigne de guidage, dérouler l'échelle dans les deux sens par rapport à la valeur courante du paramètre de vol.

Dans un mode de réalisation particulier, ledit dispositif comporte, de plus, des moyens de surveillance de l'aéronef qui sont susceptibles de détecter au moins la tendance d'un paramètre de vol de l'aéronef.

Par ailleurs, dans un mode de réalisation préféré, ledit écran de visualisation est un écran tactile, et il est formé de sorte qu'un opérateur puisse agir sur l'affichage par un contact direct dudit écran tactile, en particulier pour entrer une donnée dans le système de guidage.

La présente invention concerne également un système de guidage d'un aéronef, à savoir un directeur de vol ou un système de pilotage automatique, qui comporte un dispositif de dialogue (pour permettre un dialogue entre ledit système de guidage et un opérateur, notamment un pilote, dudit aéronef), qui présente les caractéristiques du dispositif d'affichage tel que précité.

La présente invention concerne en outre un aéronef, en particulier un avion de transport, qui est équipé :
- d'un tel dispositif d'affichage ; et/ou
- d'un tel système de guidage.
   Les figures du dessin annexé feront bien comprendre comment l'invention peut être réalisée. Sur ces figures, des références identiques désignent des éléments semblables.
   La figure 1 est le schéma synoptique d'un dispositif d'affichage conforme à l'invention.
   Les figures 2 à 10 illustrent schématiquement différents affichages conformes à l'invention, qui permettent de mettre en évidence les caractéristiques essentielles de l'invention.

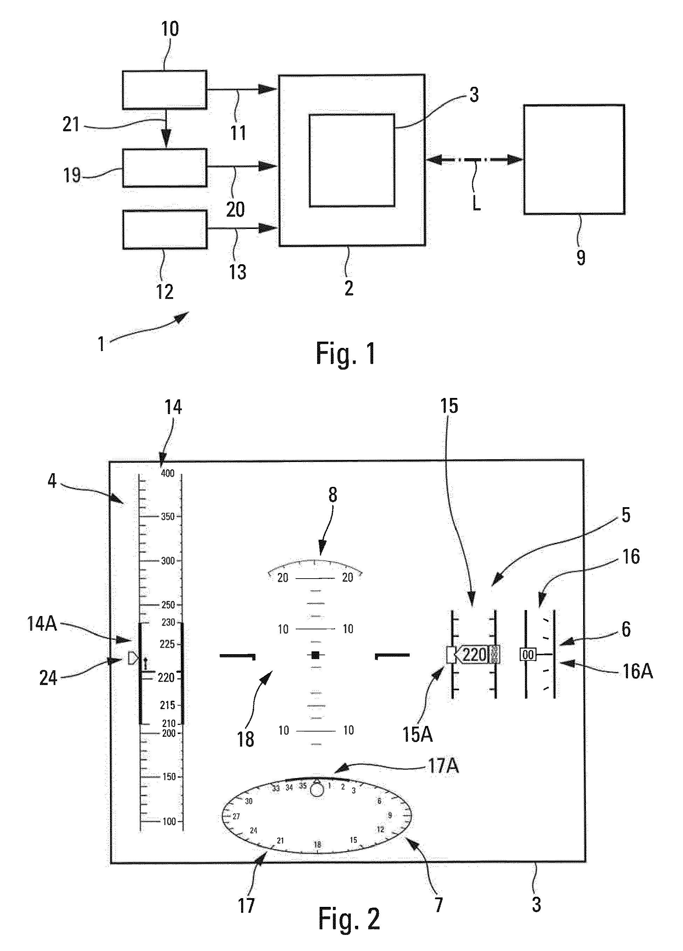

Le dispositif d'affichage 1 conforme à l'invention et représenté schématiquement sur la figure 1 est embarqué sur un aéronef, en particulier un avion de transport, non représenté, et est agencé dans le poste de pilotage dudit aéronef. Ce dispositif d'affichage 1 est destiné à afficher des paramètres de vol (vitesse, cap, altitude,...) de l'aéronef.

Pour ce faire, ledit dispositif 1 comporte des moyens d'affichage 2 comprenant au moins un écran de visualisation 3, de préférence un écran de pilotage de type PFD (« Primary Flight Display »), qui est pourvu d'éléments d'affichage 4, 5, 6, 7 et 8 (ou de zones d'affichage) dédiés à des paramètres de vol et comprenant chacun au moins une échelle correspondante.

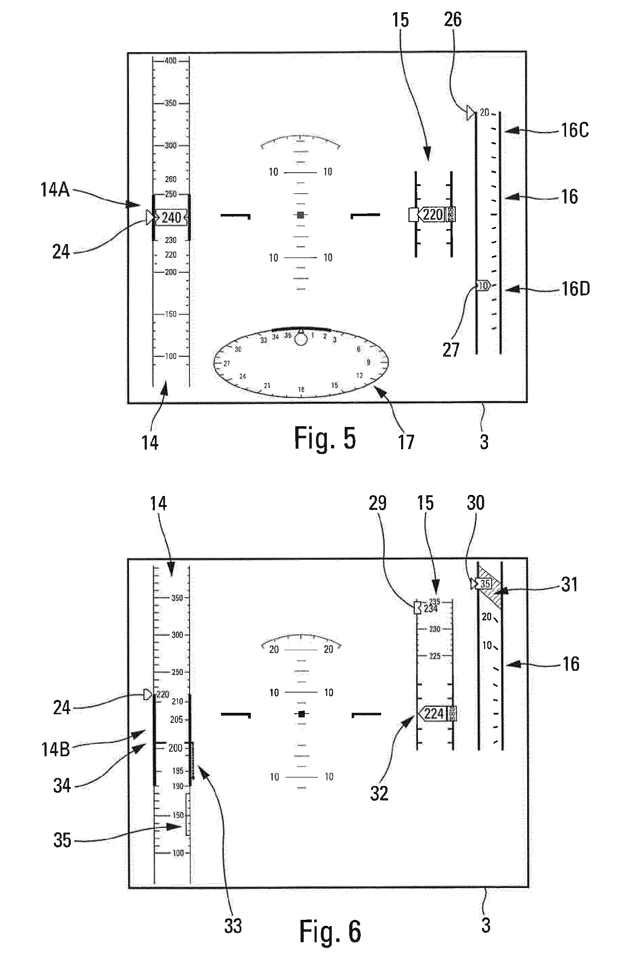

Sur les affichages montrés sur les figures 2 à 10, on a représenté notamment :
- un élément d'affichage 4 relatif à la vitesse et comprenant une échelle de vitesse 14 affichée verticalement ;
- un élément d'affichage 5 relatif à l'altitude et comprenant une échelle d'altitude 15 (ou de niveau de vol FL) affichée verticalement ;
- un élément d'affichage 6 relatif à la vitesse verticale et comprenant une échelle 16 de vitesse verticale VS (ou de pente FPA), affichée verticalement ;
- un élément d'affichage 7 relatif au cap et comprenant une échelle de cap 17, sous forme d'ellipse. Pour des raisons de simplification, cet élément d'affichage 7 n'est pas représenté sur les figures 6 à 10 ; et
- un élément d'affichage 8 comprenant notamment une échelle d'assiette 18.

Ce dispositif d'affichage 1 comporte de plus :
- un ensemble 10 de sources d'informations usuelles, qui sont reliées par l'intermédiaire d'une liaison 11 auxdits moyens d'affichage 2 et qui sont susceptibles de fournir les valeurs courantes d'une pluralité de paramètres de vol (vitesse, cap, ...) de l'aéronef ; et
- des moyens usuels 12 qui sont reliés par l'intermédiaire d'une liaison 13 auxdits moyens d'affichage 2 et qui permettent à un opérateur, en particulier un pilote de l'aéronef, d'entrer des données dans ledit dispositif 1 et de gérer le fonctionnement de ce dernier (en particulier des consignes de guidage).

Par ailleurs, ledit aéronef est susceptible d'être guidé par un système de guidage usuel 9 selon l'un d'une pluralité de modes de guidage différents.

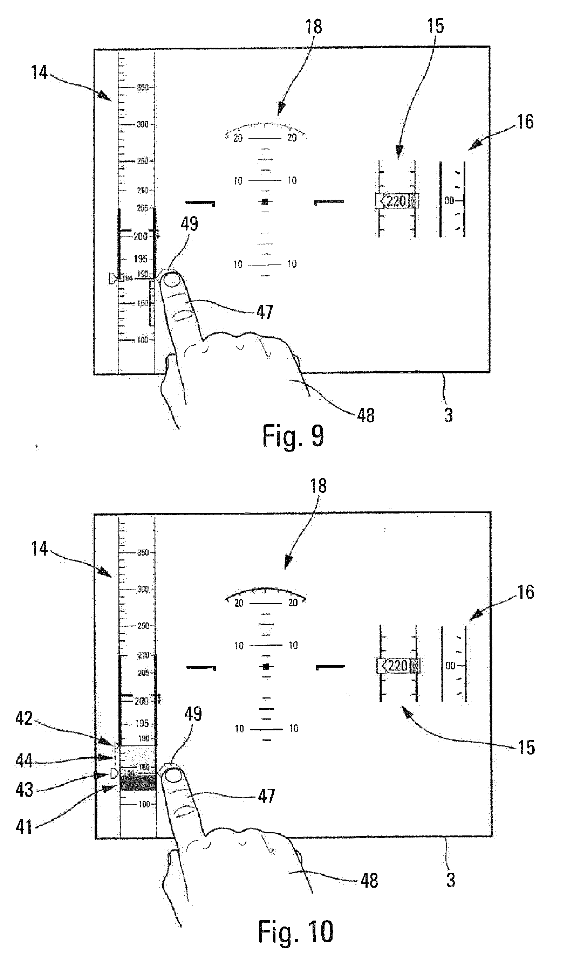

Le dispositif d'affichage 1 représente, de préférence, un dispositif de dialogue qui permet un dialogue entre au moins un opérateur de l'aéronef, notamment un pilote, et ledit système de guidage 9 dudit aéronef, comme illustré par une liaison L en traits mixtes sur la figure 1. Pour ce faire, ledit écran 3 est susceptible de restituer des informations de guidage dudit système de guidage 9, et est éventuellement destiné à entrer des données dans ledit système de guidage 9. A cet effet, dans un mode de réalisation particulier du dispositif de dialogue, ledit écran 3 est un écran tactile, et comprend des objets graphiques qui peuvent être commandés par l'opérateur par un contact direct sur l'écran tactile 3, de préférence par un contact digital (comme représenté sur les figures 9 et 10), dans le but notamment de modifier des valeurs de consigne du système de guidage 9. En outre, le dispositif de dialogue peut également comporter des moyens de commande usuels, tels que des boutons physiques que l'on peut tourner, une boule de commande (« trackball » en anglais), une souris d'ordinateur et/ou un pavé tactile (du type multitouches ou non), qui font par exemple partie desdits moyens 12.

La présente invention concerne également un tel système de guidage 9 d'un aéronef, à savoir un directeur de vol (qui calcule des consignes de pilotage en fonction de consignes de guidage) ou un système de pilotage automatique (qui permet de suivre des consignes de guidage de façon automatique), qui comporte un dispositif de dialogue tel précité, pour permettre un dialogue entre ledit système de guidage 9 et un pilote dudit aéronef.

Selon l'invention, ledit dispositif d'affichage 1 comporte, de plus, des moyens de surveillance 19 qui sont reliés par l'intermédiaire d'une liaison 20 aux moyens d'affichage 2 et qui sont, notamment, en mesure de surveiller ledit système de guidage 9 et l'aéronef (en particulier en recevant des valeurs courantes de l'ensemble 10 via une liaison 21). Lesdits moyens de surveillance 19 sont susceptibles, notamment, de détecter une situation dans laquelle à la fois :
- l'aéronef est guidé par ledit système de guidage 9 selon un mode de guidage avec pour objectif au moins une consigne de guidage donnée concernant un paramètre de vol donné ; et
- ledit mode de guidage maintien cette consigne de guidage donnée.

De plus, selon l'invention, lorsqu'une telle situation est détectée, lesdits moyens d'affichage 2 mettent en évidence, sur l'élément d'affichage dédié audit paramètre de vol et affiché sur l'écran de visualisation 3, une partie d'échelle qui est réduite et ceci à une taille correspondant au plus à une plage de maintien de ladite consigne de guidage, comme représenté à titre d'exemple pour l'échelle d'altitude 15 sur la figure 2, dont uniquement la partie d'échelle 15A située autour de la valeur courante (FL220) est affichée. Une partie d'échelle ainsi réduite est dite « partie d'échelle réduite ». Ladite plage de maintien peut être une plage considérée comme acceptable pour cette consigne de guidage ou bien simplement la valeur courante seule (qui, dans ce cas, correspond à la valeur de consigne).

En effet, lorsqu'un mode de guidage a pour objectif une consigne de guidage donnée, et que ce mode maintient effectivement cette consigne de guidage, il est inutile de visualiser toute l'échelle de valeurs de ce paramètre de vol. Dans ce cas, l'échelle est donc réduite à la valeur courante seule (qui est dans ce cas la valeur de consigne), ou à la plage de maintien. A titre d'illustration, si un mode de maintien de vitesse est considéré performant à +/-10kts (kts pour « noeuds »), et que la vitesse de consigne est maintenue par le système de guidage 9 à +/-10kts, l'échelle de vitesse 14 affichée sur l'écran 3 présentant le paramètre correspondant comprend une partie 14A qui est réduite à cette plage, à savoir sensiblement entre 210 et 230 kts autour de la valeur courante d'un peu plus de 220 kts, avec un symbole 24 illustrant la consigne, sur l'exemple de la figure 2.

En outre, si les moyens 19 détectent que ledit aéronef est guidé avec le maintien d'une pluralité de consignes de guidage, lesdits moyens d'affichage 2 mettent en évidence une partie d'échelle réduite pour chacune desdites consignes de guidage, comme cela est représenté sur la figure 2 pour les parties d'échelle réduites 14A, 1 5A, 16A et 17A qui sont mises en évidence sur cet affichage, concernant respectivement les éléments d'affichage 4, 5, 6 et 7. Ainsi, dans le cas où le système de guidage 9 maintient toutes ses consignes de guidage, un seul coup d'oeil sur l'écran 3 permet au pilote de savoir visuellement (à la vue des parties d'échelle réduites) que toutes les consignes de guidage demandées sont tenues par ledit système de guidage 9. On notera que sur la figure 2, pour les échelles 14 et 17, on a représenté le reste de l'échelle (comme précisé ci-dessous) en un trait fin, mais qui n'est pas complètement atténué pour des raisons de compréhension du dessin. Toutefois, dans l'affichage envisagé sur l'aéronef, notamment pour permettre au pilote de facilement reconnaître la situation précitée (toutes les consignes de guidage tenues), l'affichage de ce reste d'échelle est très atténué.

Dans le cadre de la présente invention, une mise en évidence graphique sur l'écran 3 d'un élément ou partie d'une échelle, peut être réalisée de différentes manières et notamment par un contraste, un design graphique différent, des traits plus larges, une luminosité ou des contrastes accentués, davantage de graduations, des tailles de caractères différentes,...

Le dispositif d'affichage 1 conforme à l'invention vient donc supporter la compréhension par le pilote du comportement des modes de guidage de l'aéronef par une modification graphique dynamique et contextuelle des éléments de l'écran 3 de type PFD.

Ledit dispositif 1 présente également les avantages suivants :
- l'affichage mis en oeuvre est compréhensible de façon universelle, quelle que soit la langue et la culture d'origine du pilote ;
- il renforce l'apprentissage du pilote qui peut continuer à apprendre pendant les phases opérationnelles, car l'écran 3 lui apportera une compréhension sur le comportement du système de guidage 9 tout au long de son utilisation ; et
- l'affichage mis en oeuvre permet d'expliciter davantage les objectifs recherchés par le système de guidage 9.

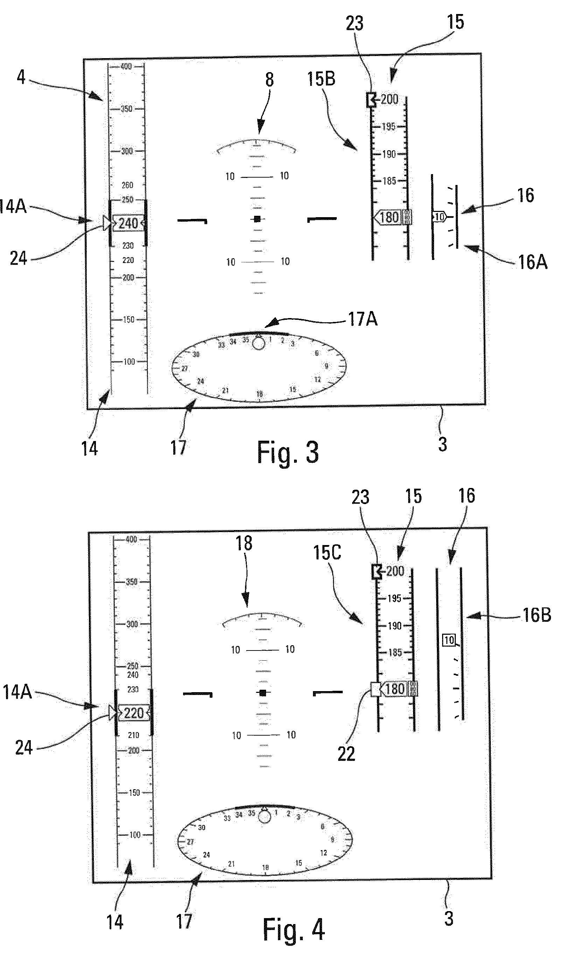

Par ailleurs, si une consigne de guidage relative à un paramètre de vol (vitesse, cap,...) est modifiée par l'entrée d'une nouvelle consigne de guidage (par le pilote à l'aide des moyens 12 par exemple ou par un système de gestion de vol en mode managé par exemple), les moyens d'affichage 2 mettent en évidence une partie d'échelle partant de la valeur courante dudit paramètre de vol jusqu'à cette nouvelle consigne de guidage, comme représenté à titre d'exemple sur la figure 3. Sur cette figure 3, on a mis en évidence, pour l'échelle d'altitude 15, une partie d'échelle 15B jusqu'à un symbole 23 illustrant la valeur de consigne (FL 200, à savoir 20000 pieds) de l'altitude. Ainsi, le pilote est informé visuellement de cette situation, et notamment de la différence entre la valeur courante et celle que le système de guidage 9 cherche à atteindre.

De la même façon, si les moyens de surveillance 19 détectent que la valeur courante d'un paramètre de vol s'éloigne de la consigne de guidage de ce paramètre de vol (par exemple en raison d'un gradient de vent qui modifie la vitesse air), les moyens d'affichage 2 mettent en évidence une partie d'échelle qui est définie entre ces deux valeurs.

En outre, les moyens de surveillance 19 sont également formés de manière à pouvoir détecter de façon usuelle la tendance, croissante ou décroissante, d'un paramètre de vol de l'aéronef. Les moyens d'affichage 2 affichent la partie de l'échelle (de préférence la demi-échelle) à partir de la valeur courante de ce paramètre de vol, correspondant à la tendance de l'aéronef, s'il n'y a pas de consigne de guidage correspondante, et ceci jusqu'à la consigne de guidage si elle se trouve sur cette partie d'échelle.

Ainsi, à titre d'illustration :
- si l'aéronef monte, les échelles 15 et 16 d'altitude et de vitesse verticale VS (ou de pente FPA) sont déroulées vers les valeurs hautes (sens de vol de l'aéronef), comme représenté par exemple sur la figure 4 avec les parties d'échelle 15C et 16B pour les échelles d'altitude et de vitesse verticale ;
- si l'aéronef descend, les échelles d'altitude et de vitesse verticale VS (ou de pente FPA) sont déroulées vers les valeurs basses (sens de vol de l'aéronef) ;
- si l'aéronef accélère, l'échelle 14 de vitesse air (CAS) est déroulée vers les vitesses hautes ; et
- si l'aéronef décélère, l'échelle 14 de vitesse air (CAS) est déroulée vers les vitesses basses.

De même, en virage, le sens de virage est indiqué par un déroulement de l'échelle de cap 17 dans le sens du virage.

En outre, les moyens de surveillance 19 vérifient si le mouvement de l'aéronef est cohérent avec une consigne de guidage relative à un paramètre de vol. En fonction de cette vérification :
- si le mouvement de l'aéronef est cohérent avec cette consigne de guidage, les moyens d'affichage 2 affichent seulement une partie d'une demi-échelle, ou la demi-échelle complète, à partir de la valeur courante de ce paramètre de vol, et ceci dans le sens du mouvement de l'aéronef ; et
- si le mouvement de l'aéronef n'est pas cohérent avec une consigne de guidage, les moyens d'affichage 2 déroulent l'échelle dans les deux sens, ce qui permet d'attirer l'attention du pilote qui devra déterminer si cela correspond à une situation normale de guidage ou non. A titre d'illustration, si le pilote a entré une consigne de vitesse verticale à monter de +2000 pieds/min (symbole 26), et que l'aéronef descend en réalité à -1000 pieds /min (symbole 27), l'échelle 16 de vitesse verticale est déployée dans les deux sens : vers le haut (16C) jusqu'à la consigne de guidage de +2000 pieds /min, et vers le bas (16D) sur toute la demi-échelle, comme représenté sur la figure 5.

En outre, dans un mode de réalisation particulier, pour un paramètre de vol correspondant à une vitesse de l'aéronef, les moyens d'affichage 2 affichent, de façon permanente, l'ensemble des valeurs utiles de vitesse sur l'échelle de vitesse 14. Cet affichage permet au pilote d'avoir une conscience visuelle de l'état de la vitesse, à savoir si elle est élevée (la valeur courante est située graphiquement en haut de l'échelle fixe) ou basse (la valeur courante est située graphiquement en bas de l'échelle fixe).

Par ailleurs, dans un mode de réalisation particulier, pour au moins une échelle dédiée à un paramètre de vol (par exemple une échelle de vitesse 14 et/ou une échelle de cap 17), les moyens d'affichage 2 affichent la totalité de l'échelle en mettant en évidence une partie de l'échelle 14A, 17A, comme précisé ci-dessous, et en affichant de plus de façon graphiquement atténuée (en transparence par exemple) le reste de cette échelle, comme représenté par exemple sur les figures 2 à 5.

Ainsi, la totalité de l'échelle 14, 17 est toujours visible mais en partie de façon atténuée, de manière notamment à pouvoir afficher des valeurs caractéristiques.

Dans ce mode de réalisation particulier, comme illustré par exemple sur la figure 2 :
- pour l'échelle de vitesse 14, la totalité de l'échelle de vitesse est toujours affichée, mais en partie de façon moins visible, de manière à toujours garder le lien avec les vitesses minimum et maximum acceptables (et/ou les vitesses caractéristiques quand cela est nécessaire) ; et
- pour l'échelle de cap 17, la totalité de l'échelle de cap (sous forme d'ellipse) est toujours affichée, mais en partie de façon moins visible. Dans ce cas, on peut par exemple afficher sur cette échelle 17 les caps caractéristiques (par exemple tous les 45° par rapport au cap courant).

En outre, en cas de présélection d'une consigne de guidage, dite préréglée (ou de « preset »), pour un paramètre de vol, les moyens d'affichage 2 ajoutent sur l'échelle dédiée à ce paramètre de vol un lien graphique entre la valeur courante dudit paramètre de vol et ladite consigne de guidage préréglée, de façon à montrer le lien (et le sens) entre la valeur courante et cette présélection. De plus, lorsque la consigne de guidage préréglée est validée et devient une nouvelle consigne de guidage effective, les moyens d'affichage 2 déroulent l'échelle entre la valeur courante et cette nouvelle consigne de guidage effective. Il y a donc une différence graphique entre une consigne de guidage prise en compte effectivement par le système, et un simple préréglage (non encore validé).

Par ailleurs, lors d'un pilotage manuel (système automatique de pilotage désengagé) de l'aéronef, les moyens d'affichage 2 déroulent sur l'écran de visualisation 3 toutes les échelles dans leur globalité de manière à créer une différenciation visuelle caractéristique.

Ces différents types de représentation peuvent être mixés, c'est-à-dire que, si par exemple un système de poussée automatique (A/THR) de l'aéronef est engagé et maintient la vitesse, l'échelle de vitesse 14 est affichée de façon réduite (partie d'échelle 14A) autour de la valeur courante (qui est aussi la consigne). Si, dans le même temps, le pilotage latéral et vertical est manuel (pilote automatique désengagé), les échelles d'altitude 15 et de cap 17 sont affichées dans leur globalité.

En outre, lors de la mise en oeuvre par le système de guidage 9 d'un mode de capture d'une consigne de guidage d'un paramètre de vol ou d'une protection relative à un paramètre de vol, les moyens d'affichage 2 affichent sur l'échelle dédiée à ce paramètre de vol une animation représentant un comportement graphique dynamique et contextuel, qui permet de bien faire comprendre cette situation au pilote. Plus précisément :
- lors de la mise en oeuvre par le système de guidage 9 d'un mode de capture d'une consigne de guidage d'un paramètre de vol, les moyens d'affichage 2 affichent une animation (comportement graphique dynamique et contextuel) qui vient supporter la compréhension de l'état de capture de cette consigne de guidage. A titre d'exemple, lorsque le mode de capture d'altitude s'engage, une animation sur l'échelle d'altitude permet de mettre en évidence que le système de guidage 9 atteint la consigne. Cette animation peut comprendre, par exemple, des flèches, des chevrons animés ou des crochets sur l'échelle d'altitude montrant l'atteinte de l'altitude de consigne ; et
- lors de la mise en oeuvre par le système de guidage 9 d'une protection relative à un paramètre de vol, les moyens d'affichage 2 affichent une animation (comportement graphique dynamique et contextuel) qui vient supporter l'explication du comportement du système de guidage 9 pour montrer clairement ce qui est protégé par le système 9. A titre d'exemple, lors d'une protection de vitesse minimum (pour protéger du décrochage), cette animation peut représenter un plateau rouge pulsant qui est affiché sur l'échelle de vitesse 14 au niveau de la vitesse protégée.

Par ailleurs, dans un mode de réalisation particulier, lorsque le système de guidage 9 dispose de deux valeurs de consigne de guidage qu'il ne peut maintenir simultanément (par exemple une vitesse air CAS et une vitesse verticale VS), les moyens d'affichage 2 mettent en évidence, de façon graphique, sur l'écran de visualisation 3, celle qui est considérée comme prioritaire par le système de guidage. Ainsi, dans ce mode de réalisation particulier, le dispositif 1 met en évidence la valeur de consigne de guidage que le système de guidage 9 considère comme prioritaire. A titre d'exemple, dans un mode VS usuel, la tenue de la consigne de vitesse verticale VS est prioritaire par rapport à la consigne de vitesse tant que cette dernière ne passe pas sous la vitesse minimum opérationnelle (VLS). Dans ce cas, si la consigne de vitesse verticale VS n'est pas compatible avec la tenue de la vitesse de consigne, cette consigne de vitesse verticale VS est rendue visible graphiquement comme prioritaire sur la consigne de vitesse. En revanche, si le paramètre de vitesse redevient prioritaire (atteinte de la vitesse minimum opérationnelle), cette tenue de vitesse minimum est rendue visible graphiquement comme prioritaire sur la consigne de vitesse verticale VS.

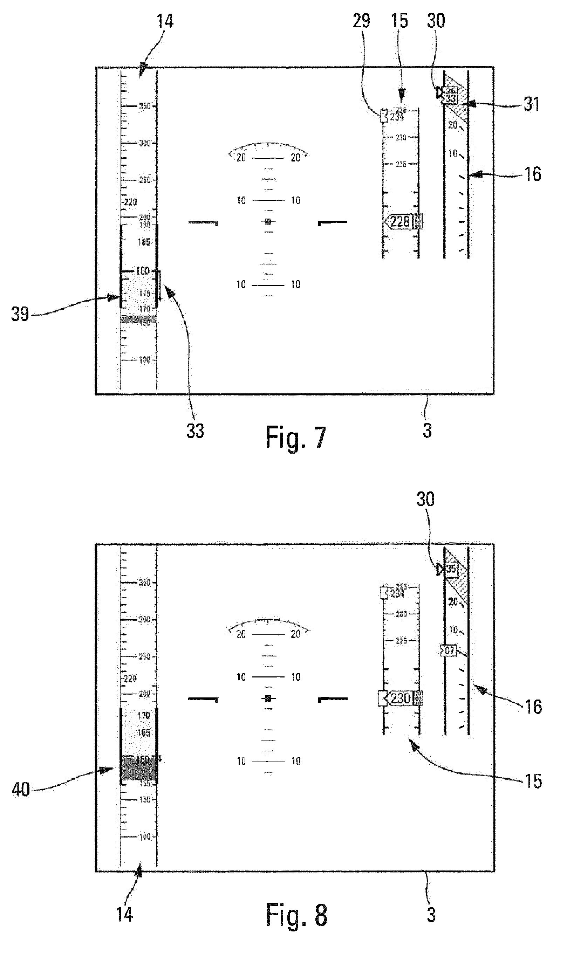

Sur les figures 6 à 8, on a représenté une telle situation. Plus précisément :
A/ pour la situation initiale, l'aéronef vole en palier et en vitesse gérée. Pour le système de guidage 9, la priorité est de tenir l'altitude. On a présélecté un niveau de vol (FL) de 234 (23400 pieds), comme illustré par le symbole 29 sur l'échelle d'altitude de la figure 6 (comprenant un symbole 32 indiquant l'altitude courante). On souhaite l'atteindre avec une vitesse verticale VS de 3500 pieds/minute (symbole 30 sur l'échelle 16 de vitesse verticale). Une plage 31, par exemple en ambre, sur l'échelle 16 indique que cette vitesse verticale ne pourra pas être tenue sans provoquer un changement dans les autres dimensions (de vitesse en l'occurrence) ;
B/ le pilote sélecte une vitesse verticale supérieure à la plage indiquée. La nouvelle priorité pour le système de guidage 9 est d'atteindre cette vitesse verticale VS. L'aéronef amorce sa montée vers le niveau de vol 234 ;
C/ la vitesse de consigne ne peut pas être tenue. La vitesse chute, mais n'atteint pas encore la vitesse minimale. La priorité, à ce stade, est toujours de tenir la vitesse verticale VS ;
D/ la vitesse continue de chuter (symbole 33 sur la figure 6) et atteint presque la vitesse minimum opérationnelle VLS (symbole 35). L'échelle de vitesse 14 est déployée de manière à éclairer toute la partie située entre la valeur de consigne (symbole 24) et la valeur courante (montrée par une flèche 34 sur la figure 6), ainsi que la zone située dans la direction de la tendance de vitesse (à savoir vers les vitesses basses). Cette situation est représentée sur la figure 6 ;
E/ la vitesse courante de l'aéronef atteint la vitesse minimum opérationnelle VLS. Le dispositif 1 réagit : la cible de vitesse (symbole 24 précédent) change de couleur (et devient par exemple ambre). L'indicateur vertical 35 se transforme en une zone 39 qui est affichée sur toute la largeur de l'échelle 14 (figure 7). La vitesse devient donc prioritaire sur la vitesse verticale. L'action du système va être d'agir sur la vitesse verticale VS (le symbole 30 qui représente la consigne de guidage qui n'est plus tenue change de couleur et devient par exemple ambre) ;
F/ la vitesse continue de chuter. Si elle dépasse la limite mise en évidence par la zone 40 sur la figure 8, une animation de blocage (par exemple rouge) est affichée sur l'écran 3.

Par ailleurs, en cas de priorité d'une protection sur au moins une consigne de guidage, de la même façon, lorsque la ou les consignes de guidage perdent leur priorité pour des questions de surpassement par des protections de commandes de vol (typiquement une protection basse vitesse, ou haute vitesse), le paramètre de guidage qui n'est plus tenu est indiqué par une représentation graphique dédiée (par exemple passage de la consigne en couleur ambre).

En outre, si pour un paramètre de vol, une consigne de guidage effectivement prise en compte par le système de guidage 9 est différente d'une consigne de guidage entrée (par le pilote à l'aide des moyens 12 ou automatiquement par un système de gestion du vol), car bridée par le système, les moyens d'affichage 2 :
- scindent, sur l'élément d'affichage dédié à ce paramètre de vol, la représentation graphique de la consigne de guidage en deux parties ; et
- mettent en évidence la partie relative à la consigne de guidage effectivement prise en compte, tout en conservant une représentation de la partie relative à la consigne de guidage entrée par le pilote.

A titre d'exemple, si la vitesse managée d'approche (VAPP) se trouve inférieure à la vitesse opérationnelle minimum (VLS) correspondant à la configuration becs et volets courante, le dispositif 1 indique sous forme d'une représentation graphique dédiée (scission ou déformation de la représentation de la consigne initiale) que la consigne de vitesse air (CAS) effectivement prise en compte par le système de guidage 9 est limitée par la vitesse VLS.

Sur les figures 9 et 10, on a représenté une telle situation. Plus précisément :
A/ pour la situation initiale, l'aéronef vole en palier et en vitesse gérée. Pour le système de guidage 9, la priorité est de tenir l'altitude. Le pilote sélecte une vitesse inférieure à la vitesse courante. Pour ce faire, il agit directement avec un doigt 47 d'une main 48 sur un moyen d'interaction 49 de l'écran 3, qui peut être saisi et déplacé le long de l'échelle 14, de manière à modifier la consigne de guidage associée, comme représenté sur la figure 9 ; et
B/ si pilote sélecte une cible inférieure à la limite VLS, comme représenté sur la figure 10 (49 dans la zone 41), la cible de vitesse se scinde en deux symboles 42 et 43 reliés ensemble par un trait 44 et s'étire. Son extrémité 43 représentant la cible vraie, montre que le système 9 va empêcher la vitesse de chuter sous la vitesse opérationnelle minimum VLS en l'accrochant.

## Revendications

1. Procédé d'affichage de paramètres de vol sur un aéronef, à l'aide d'au moins un écran de visualisation (3) comprenant des éléments d'affichage (4, 5, 6, 7) dédiés à des paramètres de vol donnés qui comprennent chacun au moins une échelle (14, 15, 16, 17) correspondante, ledit aéronef étant susceptible d'être guidé par un système de guidage (9) selon l'un d'une pluralité de modes de guidage, procédé selon lequel on surveille ledit système de guidage (9) de l'aéronef de manière à pouvoir détecter une situation dans laquelle : l'aéronef est guidé par ledit système de guidage (9) selon un mode de guidage avec pour objectif au moins une consigne de guidage donnée concernant un paramètre de vol donné et ledit mode de guidage maintient cette consigne de guidage donnée, et en ce que, lorsqu'une telle situation est détectée, on met en évidence, sur l'élément d'affichage (4, 5, 6, 7) dédié audit paramètre de vol et affiché sur l'écran de visualisation (3), une partie d'échelle (14A, 15A, 16A, 17A) qui est réduite et ceci à une taille correspondant au plus à une plage de maintien de ladite consigne de guidage,
**caractérisé en ce que** l'on vérifie si le mouvement de l'aéronef est cohérent avec une consigne de guidage relative à un paramètre de vol, et **en ce que** :
- si le mouvement de l'aéronef est cohérent avec cette consigne de guidage, on affiche seulement une partie de l'échelle à partir de la valeur courante de ce paramètre de vol, et ceci dans le sens du mouvement de l'aéronef ; et
- si le mouvement de l'aéronef n'est pas cohérent avec une consigne de guidage, on déroule l'échelle dans les deux sens (16C, 16D) par rapport à la valeur courante du paramètre de vol.

2. Procédé selon la revendication 1,
**caractérisé en ce que**, si l'on détecte que ledit aéronef est guidé avec le maintien d'une pluralité de consignes de guidage, on met en évidence une partie d'échelle réduite pour chacune desdites consignes de guidage.

3. Procédé selon l'une des revendications 1 et 2,
**caractérisé en ce que**, si une consigne de guidage est modifiée par l'entrée d'une nouvelle consigne de guidage pour un paramètre de vol, on met en évidence une partie d'échelle (15B) partant de la valeur courante (22) de ce paramètre de vol jusqu'à ladite nouvelle consigne de guidage (23), et **en ce que**, si la valeur courante d'un paramètre de vol s'éloigne de la consigne de guidage, on met en évidence une partie d'échelle définie entre ces deux valeurs.

4. Procédé selon l'une quelconque des revendications précédentes,
**caractérisé en ce que** l'on surveille la tendance, croissante ou décroissante, d'un paramètre de vol de l'aéronef, et **en ce que** l'on affiche la partie (15C, 16B) de l'échelle à partir de la valeur courante de ce paramètre de vol, correspondant à la tendance de l'aéronef, s'il n'y a pas de mode de maintien d'une consigne de guidage correspondante, et ceci jusqu'à la consigne de guidage si elle se trouve sur cette partie d'échelle.

5. Procédé selon l'une quelconque des revendications précédentes,
**caractérisé en ce que**, pour un paramètre de vol correspondant à une vitesse de l'aéronef, on affiche de façon permanente l'ensemble des valeurs utiles de vitesse sur une échelle de vitesse.

6. Procédé selon l'une quelconque des revendications précédentes,
**caractérisé en ce que**, pour au moins une échelle (14, 17) dédiée à un paramètre de vol, on affiche la totalité de l'échelle en mettant en évidence une partie (14A, 17A) de l'échelle et en affichant de façon graphiquement atténuée le reste de cette échelle (14, 17).

7. Procédé selon l'une quelconque des revendications précédentes,
**caractérisé en ce que**, en cas de présélection pour un paramètre de vol d'une consigne de guidage, dite préréglée, on ajoute sur l'échelle dédiée à ce paramètre de vol un lien graphique entre la valeur courante dudit paramètre de vol et ladite consigne de guidage préréglée, et **en ce que**, lorsque la consigne de guidage préréglée est validée et devient une nouvelle consigne de guidage effective, on déroule l'échelle entre la valeur courante et cette nouvelle consigne de guidage effective.

8. Procédé selon l'une quelconque des revendications précédentes,
**caractérisé en ce que**, lors d'un pilotage manuel de l'aéronef, on déroule sur l'écran de visualisation (3) dans leur globalité toutes les échelles dont le paramètre de vol correspondant est soumis au mode de pilotage manuel de manière à créer une différenciation visuelle caractéristique entre ce mode de pilotage manuel et un autre mode de pilotage, non manuel.

9. Procédé selon l'une quelconque des revendications précédentes,
**caractérisé en ce que**, lors de la mise en oeuvre par le système de guidage (9) d'un mode de capture d'une consigne de guidage d'un paramètre de vol, on affiche sur l'échelle dédiée à ce paramètre de vol une animation représentant un comportement graphique dynamique et contextuel, qui permet de bien faire comprendre cette situation.

10. Procédé selon l'une quelconque des revendications précédentes,
**caractérisé en ce que**, lors de la mise en oeuvre par le système de guidage (9) d'une protection relative à un paramètre de vol, on affiche sur l'échelle dédiée à ce paramètre de vol une animation représentant un comportement graphique dynamique et contextuel, qui permet de bien faire comprendre cette situation.

11. Procédé selon l'une quelconque des revendications précédentes,
**caractérisé en ce que**, lorsque le système de guidage (9) dispose de deux valeurs de consigne de guidage qu'il ne peut maintenir simultanément, on met en évidence de façon graphique sur l'écran de visualisation (3) celle qui est considérée comme prioritaire par le système de guidage (9).

12. Procédé selon l'une quelconque des revendications précédentes,
**caractérisé en ce que**, si pour un paramètre de vol, une consigne de guidage effectivement prise en compte par le système de guidage (9) est différente d'une consigne de guidage entrée, on scinde sur l'élément d'affichage dédié à ce paramètre de vol la représentation graphique de la consigne de guidage en deux parties (42, 43), et on met en évidence la partie relative à la consigne de guidage effectivement prise en compte, tout en conservant une représentation de la partie relative à la consigne de guidage entrée.

13. Dispositif d'affichage de paramètres de vol sur un aéronef, ledit dispositif (1) comportant :
- des moyens d'affichage (2) comprenant au moins un écran de visualisation (3) qui est pourvu d'éléments d'affichage (4, 5, 6, 7) dédiés à des paramètres de vol et comprenant chacun au moins une échelle (14, 15, 16, 17) correspondante, ledit aéronef étant susceptible d'être guidé par un système de guidage (9) selon l'un d'une pluralité de modes de guidage ; et
- des moyens de surveillance (19) pour surveiller ledit système de guidage (9) de l'aéronef de manière à pouvoir détecter une situation dans laquelle : l'aéronef est guidé par ledit système de guidage (9) selon un mode de guidage avec pour objectif au moins une consigne de guidage donnée concernant un paramètre de vol donné et ledit mode de guidage maintient cette consigne de guidage donnée, lesdits moyens d'affichage (2) mettant en évidence, lorsqu'une telle situation est détectée, sur l'élément d'affichage (4, 5, 6, 7) dédié audit paramètre de vol et affiché sur l'écran de visualisation (3), une partie d'échelle (14A, 15A, 16A, 17A) qui est réduite et ceci à une taille correspondant au plus à une plage de maintien de ladite consigne de guidage,
**caractérisé en ce que** les moyens de surveillance (19) sont configurés pour vérifier si le mouvement de l'aéronef est cohérent avec une consigne de guidage relative à un paramètre de vol, et **en ce que** les moyens d'affichage (2) sont configurés pour :
- si le mouvement de l'aéronef est cohérent avec cette consigne de guidage, afficher seulement une partie de l'échelle à partir de la valeur courante de ce paramètre de vol, et ceci dans le sens du mouvement de l'aéronef ; et
- si le mouvement de l'aéronef n'est pas cohérent avec une consigne de guidage, dérouler l'échelle dans les deux sens (16C, 16D) par rapport à la valeur courante du paramètre de vol.

14. Dispositif d'affichage selon la revendication 13,
**caractérisé en ce qu'**il comporte, de plus, des moyens (19) de surveillance de l'aéronef qui sont susceptibles de détecter au moins la tendance d'un paramètre de vol de l'aéronef.

15. Dispositif d'affichage selon l'une des revendications 13 et 14,
**caractérisé en ce que** ledit écran (3) est un écran tactile, et **en ce qu'**un opérateur peut agir sur l'affichage par un contact direct dudit écran tactile (3).

## Patentansprüche

1. Anzeigeverfahren von Flugparametern über ein Flugzeug, mit Hilfe mindestens eines Bildschirms (3), der Anzeigeelemente (4, 5, 6, 7) umfasst, die vorgegebenen Flugparametern zugeordnet sind, welche jeder mindestens eine entsprechende Skala (14, 15, 16, 17) umfasst, wobei besagtes Flugzeug geeignet ist, über eine Leitsystem (9) gemäß einer Vielzahl an Lenkmodi geflogen zu werden, sowie ein Verfahren gemäß dem das besagte Leitsystem (9) des Flugzeugs überwacht wird, um eine Situation erfassen zu können, in der: das Flugzeug mit dem besagten Leitsystem (9) gemäß einem Lenkmodus geflogen wird, der zum Ziel mindestens eine gegebene Lenkanweisung betreffend einen Flugparameter hat, wobei der besagte Lenkmodus diese Lenkvorgabe beibehält und, wenn eine solche Situation erfasst wird, auf dem, diesem Flugparameter zugeordneten und auf dem Bildschirm (3) angezeigten Anzeigeelement (4, 5, 6, 7) einen Teil der reduzierten Skala (14A, 14B, 14C, 14D), in einer Größe sichtbar macht, die maximal dem Bereich der Beibehaltung der besagten Lenkanweisung entspricht,
**dadurch gekennzeichnet, dass** überprüft wird, ob die Bewegung des Flugzeugs mit einer Lenkanweisung übereinstimmt, die einem Flugparameter entspricht, sowie dadurch, dass:
- wenn die Bewegung des Flugzeugs mit dieser Lenkanweisung übereinstimmt, nur ein Teil der Skala, ab dem aktuellen Wert dieses Flugparameters, und dies in Vorschubrichtung des Flugzeugs; gezeigt wird; und
- wenn diese Bewegung des Flugzeugs mit dieser Lenkanweisung nicht übereinstimmt, wird die Skala in beide Richtungen (16C, 16D) in Bezug auf den aktuellen Wert dieses Flugparameters entrollt.

2. Verfahren gemäß Anspruch 1,
**dadurch gekennzeichnet, dass** wenn man erfasst, dass das Flugzeug unter Beibehalt einer Vielzahl Fluganweisungen geflogen wird, wird ein Teil einer reduzierten Skala für jede dieser besagten Fluganweisungen angezeigt.

3. Verfahren gemäß Anspruch 1 oder 2,
**dadurch gekennzeichnet, dass** wenn eine Lenkanweisung durch Eingabe einer neuen Lenkanweisung für einen Flugparameter geändert wird, ein Teil der Skala (15B) ab dem aktuellen Wert (22) dieses Flugparameters bis hin zum Sollwert der neuen Lenkanweisung (23) angezeigt wird, und dass wenn der aktuelle Wert eines Flugparameters sich vom Sollwert der Lenkanweisung entfernt, ein zwischen diesen beiden Werten definierter Teil der Skala hervorgehoben wird.

4. Verfahren gemäß einem beliebigen der vorstehenden Ansprüche,
**dadurch gekennzeichnet, dass** man die Tendenz, steigend oder fallend, eines Flugparameters eines Flugzeugs überwacht, und dass man den Teil (15C, 16B) der Skala ab dem aktuellen Wert dieses Flugparameters entsprechend der Tendenz des Flugzeugs anzeigt, wenn es keinen Bewahrungsmodus einer entsprechenden Lenkanweisung gibt, und dies bis zur Lenkvorgabe, wenn diese sich auf diesem Teil der Skala befindet.

5. Verfahren gemäß einem beliebigen der vorstehenden Ansprüche,
**dadurch gekennzeichnet, dass** für einen, einer Geschwindigkeit des Flugzeugs entsprechenden Flugparameter, permanent sämtliche, für eine Geschwindigkeit nützlichen Werte auf einer Geschwindigkeitsskala angezeigt werden.

6. Verfahren gemäß einem beliebigen der vorstehenden Ansprüche,
**dadurch gekennzeichnet, dass** mindestens eine, einem Flugparameter zugeordnete Skala (14, 17) gänzlich gezeigt wird, indem ein Teil (14A, 17A) der Skala hervorgehoben wird und indem der Rest dieser Skala (14, 17) graphisch weniger kontrastiert im Hintergrund verblasst.

7. Verfahren gemäß einem beliebigen der vorstehenden Ansprüche,
**dadurch gekennzeichnet, dass** im Fall einer Vorwahl einer Lenkanweisung für einen Flugparameter, d.h. eine sogenannte voreingestellte Anweisung, fügt man der diesem Flugparameter zugeordnete Skala einen graphischen Link zwischen dem aktuellen Wert des besagten Flugparameters und der besagte voreingestellten Lenkanweisung, und dadurch, dass wenn die voreingestellte Lenkanweisung quittiert wird und eine neue effektive Lenkanweisung wird, die Skala zwischen dem aktuellen Wert und dem neuen effektiven Sollwert abgerollt.

8. Verfahren gemäß einem beliebigen der vorstehenden Ansprüche,
**dadurch gekennzeichnet, dass** während einer manuellen Steuerung des Flugzeugs, auf dem Bildschirm (3) alle Skalen integral abgerollt werden, deren entsprechender Flugparameter einer manuellen Steuerung unterzogen ist, um eine charakteristische, visuelle Differenzierung zwischen dieser manuellen Steuerung und einem anderen nicht manuellen Steuerungsmodus.

9. Verfahren gemäß einem beliebigen der vorstehenden Ansprüche,
**dadurch gekennzeichnet, dass** während der Umsetzung durch das Lenksystem (9) eines Erfassungsmodus einer Lenkanweisung bezüglich einen Flugparameter, zeigt man auf der, diesem Flugparameter zugeordneten Skala eine Animation, die das graphische dynamische und kontextuelle Verhalten anzeigt, was ermöglicht, diese Situation gut verständlich zu machen.

10. Verfahren gemäß einem beliebigen der vorstehenden Ansprüche,
**dadurch gekennzeichnet, dass** während der Umsetzung durch das Lenksystem (9) einer Schutzmaßnahme in Bezug auf einen Flugparameter, zeigt man auf der diesem Flugparameter zugeordneten Skala eine Animation, die das graphische dynamische und kontextuelle Verhalten anzeigt, was ermöglicht, diese Situation gut verständlich zu machen.

11. Verfahren gemäß einem beliebigen der vorstehenden Ansprüche,
**dadurch gekennzeichnet, dass** während das Lenksystem (9) über zwei Flugparameter-Werte verfügt, die nicht gleichzeitig gewahrt werden können, wird auf dem Bildschirm (3) derjenige graphisch hervorgehoben angezeigt, der vom Leitsystem (9) als vorrangig betrachtet wird.

12. Verfahren gemäß einem beliebigen der vorstehenden Ansprüche,
**dadurch gekennzeichnet, dass** wenn für einen Flugparameter eine Lenkanweisung effektiv vom Lenksystem (9) übernommen worden ist, die anders ist als die eingegebene Lenkanweisung, wird das dem Flugparameter zugeordnete Anzeigeelement die graphische Darstellung der Lenkanweisung in zwei Abschnitte (42, 43) geteilt und der, der Lenkanweisung entsprechende und effektiv übernommene Teil hervorgehoben, und Beibehalt des Teils der eingegebenen Lenkanweisung.

13. Anzeigevorrichtung von Flugparametern über ein Flugzeug, wobei die besagte Vorrichtung (1) folgendes umfasst:
- Anzeigemittel (2), umfassend mindestens einen Bildschirm (3), der Anzeigeelemente (4, 5, 6, 7) umfasst, die vorgegebenen Flugparametern zugeordnet sind, welche jeder mindestens eine entsprechende Skala (14, 15, 16, 17) umfasst, wobei besagtes Flugzeug geeignet ist, über eine Leitsystem (9) gemäß einer Vielzahl an Lenkmodi geflogen zu werden; und
- Überwachungsmittel (19) zur Überwachung des besagten Leitsystems (9) des Flugzeugs, um eine Situation erfassen zu können, in der:
das Flugzeug vom besagten Leitsystem (9) gemäß einem Lenkmodus geflogen wird, der zum Ziel mindestens eine gegebene Lenkanweisung betreffend einen Flugparameter hat, wobei der besagte Lenkmodus diese gegebene Lenkanweisung beibehält und wo die besagten Anzeigemittel (2), wenn eine solche Situation erfasst wird, auf dem besagten, dem Flugparameter zugeordneten Anzeigeelement (4, 5, 6, 7), und auf dem Bildschirm (3) ein Teil einer reduzierten Skala (14A, 15A, 16A, 17A) in einer Größe sichtbar macht, die maximal dem Bereich der Beibehaltung der besagten Lenkanweisung entspricht,
**dadurch gekennzeichnet, dass** die Überwachungsmittel (19) konfiguriert sind, um zu überprüfen, ob die Bewegung des Flugzeugs mit einer Lenkanweisung übereinstimmt, die einem Flugparameter entspricht, sowie dadurch, dass die Überwachungsmittel (2) konfiguriert sind, um:
- wenn die Bewegung des Flugzeugs mit dieser Lenkanweisung übereinstimmt, nur einen Teil der Skala ab dem dieses Flugparameters gezeigt zu werden, in Vorschubrichtung des Flugzeugs; und
- wenn die Bewegung des Flugzeugs mit dieser Lenkanweisung nicht übereinstimmt, die Skala in beide Richtungen (16C, 16D) in Bezug auf den aktuellen Wert dieses Flugparameters entrollt zu werden.

14. Anzeigevorrichtung gemäß Anspruch 13, **dadurch gekennzeichnet, dass** sie darüber hinaus Überwachungsmittel (19) des Flugzeugs umfasst, die geeignet sind, mindestens eine Tendenz eines Flugparameters des Flugzeugs zu erkennen.

15. Anzeigevorrichtung gemäß einem der Ansprüche 13 und 14,
**dadurch gekennzeichnet, dass** der besagte Bildschirm (3) ein berührungsempfindlicher Bildschirm ist und dass ein Bediener auf die Anzeige durch direkten Kontakt mit dem berührungsempfindlichen Bildschirm (3) einwirken kann.

## Claims

1. A method of displaying flight parameters on an aircraft, with the aid of at least one viewing screen (3) comprising display elements (4, 5, 6, 7) dedicated to given flight parameters which each comprise at least one corresponding scale (14, 15, 16, 17), said aircraft being capable of being guided by a guidance system (9) according to one of a plurality of guidance modes, according to which method said aircraft guidance system (9) is monitored so as to be able to detect a situation in which: the aircraft is guided by said guidance system (9) according to a guidance mode having as objective at least one given guidance setpoint relating to a given flight parameter and said guidance mode holds this given guidance setpoint, and wherein, when such a situation is detected, a scale part (14A, 15A, 16A, 17A) which is reduced to a size corresponding at most to a holding range for said guidance setpoint is highlighted on the display element (4, 5, 6, 7) dedicated to said flight parameter and displayed on the viewing screen (3),
**characterized in that** a check is performed to verify whether the motion of the aircraft is consistent with a guidance setpoint relating to a flight parameter, and **in that**:
- if the motion of the aircraft is consistent with this guidance setpoint, then only a part of the scale is displayed onward of the current value of this flight parameter, doing so in the direction of the motion of the aircraft; and
- if the motion of the aircraft is not consistent with a guidance setpoint, the scale is unraveled in both directions (16C, 16D) with respect to the current value of the flight parameter.

2. The method according to claim 1,
**characterized in that**, if it is detected that said aircraft is guided with the holding of a plurality of guidance setpoints, a reduced scale part is highlighted for each of said guidance setpoints.

3. The method according to one of claims 1 and 2,
**characterized in that**, if a guidance setpoint is modified by the input of a new guidance setpoint for a flight parameter, a scale part (15B) is highlighted starting from the current value (22) of this flight parameter as far as said new guidance setpoint (23), and **in that**, if the current value of a flight parameter strays from the guidance setpoint, a scale part defined between these two values is highlighted.

4. The method according any one of the preceding claims,
**characterized in that** the trend, increasing or decreasing, of a flight parameter of the aircraft is monitored, and **in that** the part (15C, 16B) of the scale is displayed onward of the current value of this flight parameter, corresponding to the trend of the aircraft, if there is no mode of holding of a corresponding guidance setpoint, doing so as far as the guidance setpoint if it is situated on this scale part.

5. The method according any one of the preceding claims,
**characterized in that**, for a flight parameter corresponding to a speed of the aircraft, the set of useful speed values is displayed permanently on a speed scale.

6. The method according any one of the preceding claims,
**characterized in that**, for at least one scale (14, 17) dedicated to a flight parameter, the entirety of the scale is displayed by highlighting a part (14A, 17A) of the scale and by displaying the remainder of this scale (14, 17) in a graphically attenuated manner.

7. The method according any one of the preceding claims,
**characterized in that**, in the case of preselection for a flight parameter of a, so-called preset, guidance setpoint, a graphical relationship between the current value of said flight parameter and said preset guidance setpoint is added to the scale dedicated to this flight parameter, and **in that**, when the preset guidance setpoint is validated and becomes a new effective guidance setpoint, the scale is unraveled between the current value and this new effective guidance setpoint.

8. The method according any one of the preceding claims,
**characterized in that**, during manual piloting of the aircraft, all the scales whose corresponding flight parameter is subjected to the manual piloting mode are unraveled on the viewing screen (3) in their totality so as to create a characteristic visual differentiation between this manual piloting mode and another, non-manual, piloting mode.

9. The method according any one of the preceding claims,
**characterized in that**, during the implementation by the guidance system (9) of a mode of capture of a guidance setpoint of a flight parameter, an animation representing a dynamic and contextual graphical behavior, which enables this situation to be properly understood, is displayed on the scale dedicated to this flight parameter.

10. The method according any one of the preceding claims,
**characterized in that**, during the implementation by the guidance system (9) of a protection relating to a flight parameter, an animation representing a dynamic and contextual graphical behavior, which enables this situation to be properly understood, is displayed on the scale dedicated to this flight parameter.

11. The method as claimed in claim 1,
**characterized in that**, when the guidance system (9) has two guidance setpoint values that it may not hold simultaneously, the one which is considered to be of priority by the guidance system (9) is highlighted in a graphical manner on the viewing screen (3).

12. The method according any one of the preceding claims,
**characterized in that**, if for a flight parameter, a guidance setpoint actually taken into account by the guidance system (9) is different from an input guidance setpoint, the graphical representation of the guidance setpoint is split on the display element dedicated to this flight parameter into two parts (42, 43), and the part relating to the guidance setpoint actually taken into account is highlighted, while preserving a representation of the part relating to the input guidance setpoint.

13. A device for displaying flight parameters on an aircraft, said device comprising:
- display means (2) comprising at least one viewing screen (3) which is provided with display elements (4, 5, 6, 7) dedicated to flight parameters and each comprising at least one corresponding scale (14, 15, 16, 17), said aircraft being capable of being guided by a guidance system (9) according to one of a plurality of guidance modes; and
- monitoring means (19) for monitoring said aircraft guidance system so as to be able to detect a situation in which:
the aircraft is guided by said guidance system (9) according to a guidance mode having as objective at least one given guidance setpoint relating to a given flight parameter and said guidance mode holds this given guidance setpoint, said display means (2) highlighting, when such a situation is detected, on the display element (4, 5, 6, 7) dedicated to said flight parameter and displayed on the viewing screen (3), a scale part (14A, 15A, 16A, 17A) which is reduced to a size corresponding at most to a holding range for said guidance setpoint, **characterized in that** the monitoring means (19) are configured to verify whether the motion of the aircraft is consistent with a guidance setpoint relating to a flight parameter, and **in that** the display means are configured to:
- if the motion of the aircraft is consistent with this guidance setpoint, display only a part of the scale onward of the current value of this flight parameter, doing so in the direction of the motion of the aircraft; and
- if the motion of the aircraft is not consistent with a guidance setpoint, unravel the scale in both directions (16C, 16D) with respect to the current value of the flight parameter.

14. The display device according to claim 13,
**characterized in that** it comprises, moreover, means (19) for monitoring the aircraft which are capable of detecting at least the trend of a flight parameter of the aircraft.

15. The display device according to one of claims 13 and 14,
**characterized in that** said screen (3) is a touchscreen, and wherein an operator can act on the display by direct contact with said touchscreen (3).
